(19) Europäisches Patentamt
European Patent Office
Office européen des brevets

(11) **EP 2 081 302 A1**

(12) **EUROPEAN PATENT APPLICATION**
published in accordance with Art. 153(4) EPC

(43) Date of publication:
**22.07.2009 Bulletin 2009/30**

(51) Int Cl.:
***H04B 7/08*** *(2006.01)*

(21) Application number: **08702871.8**

(22) Date of filing: **05.02.2008**

(86) International application number:
**PCT/JP2008/000139**

(87) International publication number:
**WO 2008/096531 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.02.2007 JP 2007026726**

(71) Applicant: **Panasonic Corporation**
**Kadoma-shi**
**Osaka 571-8501 (JP)**

(72) Inventors:
• **TSUKIO, Yasunobu**
  **Osaka-Shi**
  **Osaka 540-6207 (JP)**
• **OZEKI, Hiroaki**
  **Osaka-Shi**
  **Osaka 540-6207 (JP)**

(74) Representative: **Pautex Schneider, Nicole Véronique et al**
**Novagraaf International SA**
**25, avenue du Pailly**
**1220 Les Avanchets - Geneva (CH)**

(54) **RECEIVER AND RECEIVING SYSTEM USING THE SAME**

(57) If receiving circuit (2) is in a high-sensitivity mode, receiving circuit (2) is switched to a low-sensitivity mode when the BER according to BER measurement circuit (6) becomes more favorable than a release threshold. If receiving circuit (2) is in the low-sensitivity mode, receiving circuit (2) is switched to the high-sensitivity mode when the BER according to BER measurement circuit (6) becomes more adverse than a start-up threshold. If switching between the high-sensitivity and low-sensitivity modes occurs, control is exercised so that switching from the high-sensitivity mode to the low is resistant to occurring, thereby suppressing the occurrence of a reception error caused by switching between the receiving modes.

FIG. 1

**Description**

TECHNICAL FIELD

The present invention relates to a receiving apparatus selecting a receiving mode that trades off the reception performance against the operation power according to a reception environment and to a receiving system including the receiving apparatus.

BACKGROUND ART

In a receiving apparatus incorporated into a small mobile terminal, the receiving antenna needs to be made small and thus is a low-gain one. Further, the apparatus is used in an adverse environment where reception is performed while the user is moving, for example. Consequently, high receiver sensitivity is demanded. Meanwhile, for a receiving apparatus driven by a battery, the power consumption needs to be suppressed, and both opposite performances of high receiver sensitivity and low power consumption need to be satisfied.

Under the circumstances, a receiving apparatus is disclosed in patent literature 1, for example, that satisfies both of high receiver sensitivity and low power consumption by controlling switching between a receiving mode with high receiver sensitivity and high power consumption, and a receiving mode with low receiver sensitivity and low power consumption according to the change of the reception environment.

However, thus controlling switching between the receiving modes according to the change of the reception environment sometimes causes a reception error even at a reception level higher than the sensitivity level in the high-sensitivity mode. That is to say, the receiving apparatus operates by switching control in the low-sensitivity mode of low receiver sensitivity and low power consumption for a high reception level; and in the high-sensitivity mode of high receiver sensitivity and high power consumption for a low reception level. Here, if no reception error occurs at a reception level higher than the receiver sensitivity level in the high-sensitivity mode, it is an ideal switching control. However, a reception error may actually occur at a high reception level.

That is, at a reception level between a receiver sensitivity level in the high-sensitivity mode and that in the low-sensitivity mode, reception becomes impossible in the low-sensitivity mode and reception is performed by a sufficient margin in the high-sensitivity mode. Accordingly, at such an intermediate level, control is exercised so as to enter the low-sensitivity mode in the high-sensitivity mode of the receiving apparatus; the high-sensitivity mode, in the low-sensitivity mode. Consequently, in such a level range, switching between the high-sensitivity and low-sensitivity modes occurs highly frequently, thus a reception error occurs while the receiving apparatus is in the low-sensitivity mode.

[Patent literature 1] Japanese Patent Unexamined Publication No. 2006-311258

SUMMARY OF THE INVENTION

The present invention provides a receiving apparatus having plural receiving modes with different receiver sensitivities, that suppresses the occurrence of a reception error caused by switching receiving modes highly frequently.

A receiving apparatus of the present invention includes a receiving circuit having a high-sensitivity mode and a low-sensitivity mode (lower than the high-sensitivity mode); a reception quality judging circuit judging the reception quality of a reception signal output from the receiving circuit; and a control circuit controlling switching between the high-sensitivity and low-sensitivity modes according to a signal from the reception quality judging circuit. In the high-sensitivity mode of the receiving circuit, the control circuit switches the receiving circuit to the low-sensitivity mode when the judgement result by the reception quality judging circuit indicates a state more favorable than the release threshold. In the low-sensitivity mode of the receiving circuit, the control circuit switches the receiving circuit to the high-sensitivity mode when the judgement result by the reception quality judging circuit indicates a state more adverse than the start-up threshold. When switching between the high-sensitivity and low-sensitivity modes occurs, the control circuit exercises control so that switching from the high-sensitivity mode to the low is resistant to occurring.

With the above-described configuration, at an intermediate reception level between the receiver sensitivity level in the high-sensitivity mode and that in the low-sensitivity mode, the time ratio of the high-sensitivity mode gradually increases with time and that of the low-sensitivity mode decreases. This results in a higher time ratio of the high-sensitivity mode to the total time of the high-sensitivity and low-sensitivity modes, suppressing the occurrence of a reception error caused by switching the receiving modes highly frequently.

BRIEF DESCRIPTION OF DRAWINGS

Fig. 1 is a block diagram of a receiving apparatus according to the first exemplary embodiment of the present invention.
Fig. 2 shows a first receiver sensitivity characteristic in the diversity receiving mode and the single receiving mode.
Fig. 3 shows a second receiver sensitivity characteristic in the diversity receiving mode and the single receiving mode.
Fig. 4 shows a first state transition in the diversity receiving mode and the single receiving mode.
Fig. 5 shows a second state transition in the diversity receiving mode and the single receiving mode.
Fig. 6 shows a third state transition in the diversity receiving mode and the single receiving mode.
Fig. 7 is a block diagram of the substantial part of a receiving apparatus according to the second exemplary embodiment of the present invention.

Reference marks in the drawings

| 1 | Receiving apparatus |
| 2, 11 | Receiving circuit |
| 3 | Error correction circuit |
| 4 | Decoding circuit |
| 5 | Display circuit |
| 6 | BER measurement circuit |
| 7 | Control circuit |
| 8 | First receiving circuit |
| 9 | Second receiving circuit |
| 10 | Selecting or combining circuit |
| 12 | Antenna |
| 13 | RF filter |
| 14 | RFAGC |
| 15 | RFGCA |
| 16 | VCO |
| 17 | Mixer |
| 18 | IF filter |
| 19 | IFGCA |
| 20 | ADC |
| 21 | Demodulating circuit |

DETAILED DESCRIPTION OF PREFERRED EMBODIMENTS

Hereinafter, a description is made for some embodiments of the present invention with reference to the related drawings.

FIRST EXEMPLARY EMBODIMENT

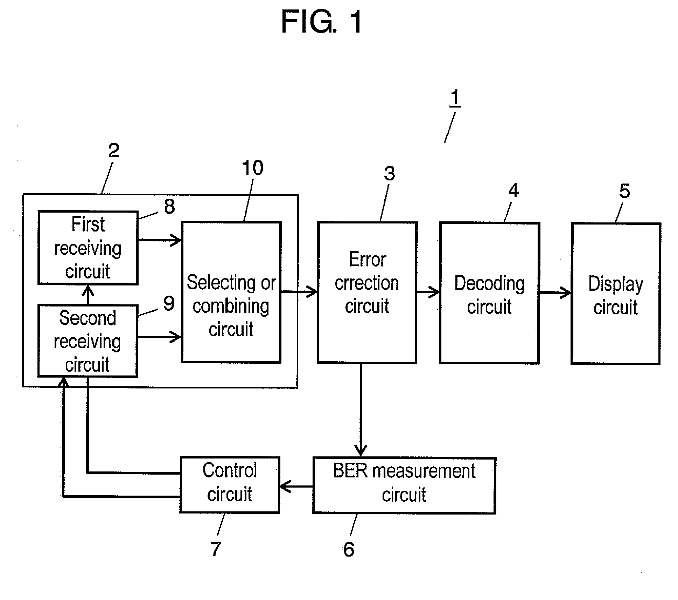

Hereinafter, a description is made for the first exemplary embodiment of the present invention. In Fig. 1, receiving apparatus 1 includes receiving circuit 2, error correction circuit 3 connected to the output side of receiving circuit 2, decoding circuit 4 connected to the output side of error correction circuit 3, and display circuit 5 connected to the output side of decoding circuit 4.
Receiving apparatus 1 further includes BER (bit error rate) measurement circuit 6 connected to error correction circuit 3; and control circuit 7 controlling receiving circuit 2 on the basis of a signal from BER measurement circuit 6. That is, control circuit 7 controls receiving circuit 2 according to information on a reception environment acquired by BER measurement circuit 6 as a reception quality judging circuit. Receiving circuit 2 further includes first receiving circuit 8 and second receiving circuit 9 receiving an external signal; and selecting or combining circuit 10 connected to the output side of first receiving circuit 8 and second receiving circuit 9, selecting or synthesizing output signals from circuits 8, 9.
In some cases, receiving apparatus 1 includes all of these components; in other cases, one or more of these.
In this embodiment, a description is made for an example where BER measurement circuit 6, used as a reception quality judging circuit, measures the bit error rate of an error signal detected by error correction circuit 3. However, a circuit for measuring another error rate such as the packet error rate of a TS (transport stream) may be used.
With the above-described configuration, receiving apparatus 1 can operate in the diversity receiving mode (high-sensitivity mode), where first receiving circuit 8 and second receiving circuit 9 are used to select or to synthesize a signal; or in the single receiving mode (low-sensitivity mode), where only one of first receiving circuit 8 and second receiving circuit 9 is used, and the other is powered off.

In the receiving system of the present invention, the output from error correction circuit 3 is connected to display circuit 5 through decoding circuit 4.

Thus, in the receiving system of the present invention, decoding circuit 4 reconstructs a signal output from error correction circuit 3 to a transmission data in whichever receiving mode described above, and the transmission data reconstructed can be displayed by display circuit 5.

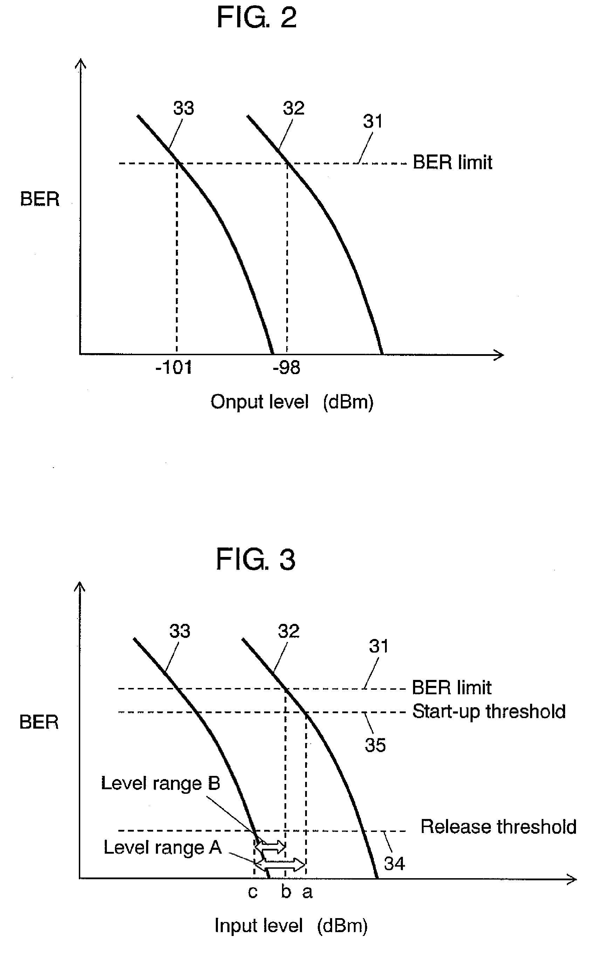

Fig. 2 shows a first receiver sensitivity characteristic in the diversity receiving mode and the single receiving mode.

In Fig. 2, the horizontal axis represents the level of input to receiving circuit 2; the vertical axis, the bit error rate (BER) of a reception signal. The receiver sensitivity is typically defined by the level of input at which the BER reaches limit value (BER limit hereinafter) 31 under which decoding circuit 4 can reconstruct transmission data normally. In the example of Fig. 2, the receiver sensitivity in single receiving mode 32 is -98 dBm and that in diversity receiving mode 33 is -101 dBm. That is, diversity receiving mode 33 has sensitivity more favorable than single receiving mode 32 by 3 dB.

Meanwhile, receiving circuit 2 implemented with a high-frequency circuit, typically consuming much power, consumes significantly more power in diversity receiving mode 33 than in single receiving mode 32, where either one of first receiving circuit 8 and second receiving circuit 9 is powered off.

Here, each value (-98 dBm, -101 dBm, 3dB) above, taken as an example, depends on the performance of receiving circuit 2.

Control circuit 7 controls switching between diversity receiving mode 33 and single receiving mode 32 according to a reception environment. As a method of acquiring information on a reception environment, another error rate such as the packet error rate of a TS (transport stream) or a reception level may be used, besides a BER. Alternatively, the ratio (referred to as C/N ratio hereinafter) of the reception level of the subcarrier to the noise level may be used. When a reception level is used, it can be obtained from an automatic gain control (AGC) voltage, for example. When a C/N ratio is used, it can be estimated from an error vector magnitude (EVM), a deviation from the ideal constellation point, for example.

In this embodiment, a method using a BER is described as an example. That is, when a BER output from BER measurement circuit 6 is smaller than a threshold preliminarily set, control circuit 7 judges that the level of input to receiving circuit 2 is high and the reception environment is favorable. At this moment, switching is made from diversity receiving mode 33 to single receiving mode 32. Hereinafter, the threshold of a BER preliminarily set for switching from diversity receiving mode 33 to single receiving mode 32 is referred to as a release threshold.

Meanwhile, when a BER output from BER measurement circuit 6 is higher than a threshold preliminarily set, control circuit 7 judges that the level of input to receiving circuit 2 is low and the reception environment is adverse. At this moment, switching is made from single receiving mode 32 to diversity receiving mode 33. Hereinafter, the threshold of a BER preliminarily set for switching from single receiving mode 32 to diversity receiving mode 33 is referred to as a start-up threshold.

This control enables power consumption to be reduced in single receiving mode 32 in a favorable reception environment and the reception performance to be ensured in diversity receiving mode 33 in an adverse reception environment. Here, the values of the release threshold and start-up threshold may be the same or different.

In this embodiment, however, the difference between the receiver sensitivity in single receiving mode 32 and that in diversity receiving mode 33 is as large as approximately 3 dB, and thus at an intermediate input level between them, switching between the receiving modes occurs periodically.

This phenomenon is described using Fig. 3, which shows a second receiver sensitivity characteristic in the diversity receiving mode and the single receiving mode, indicating release threshold 34 and start-up threshold 35 aforementioned.

First, a consideration is made for a level range (level range A hereinafter) which is input level a (reaching start-up threshold 35 in single receiving mode 32) or lower, and is input level c (reaching release threshold 34 in diversity receiving mode 33) or higher. In level range A, the BER is higher than start-up threshold 35 in single receiving mode 32, and thus control circuit 7 controls switching to diversity receiving mode 33. In diversity receiving mode 33, meanwhile, the BER is lower than release threshold 34, and thus control circuit 7 controls switching to single receiving mode 32. Consequently, switching is made between single receiving mode 32 and diversity receiving mode 33 periodically. That is, the receiving modes are switched periodically while the input level of receiving apparatus 1 is steadily in this level range A.

Next, a consideration is made for a level range (level range B hereinafter) which is input level b (reaching an error limit in single receiving mode 32, i.e. a sensitivity level) or lower, and is input level c (reaching release threshold 34 in diversity receiving mode 33) or higher. In level range B, a reception error occurs as a result of periodic switching. That is to say, errors occur at a rate of BER limit 31 or higher, preventing decoding circuit 4 at the subsequent stage from normally reconstructing transmission data.

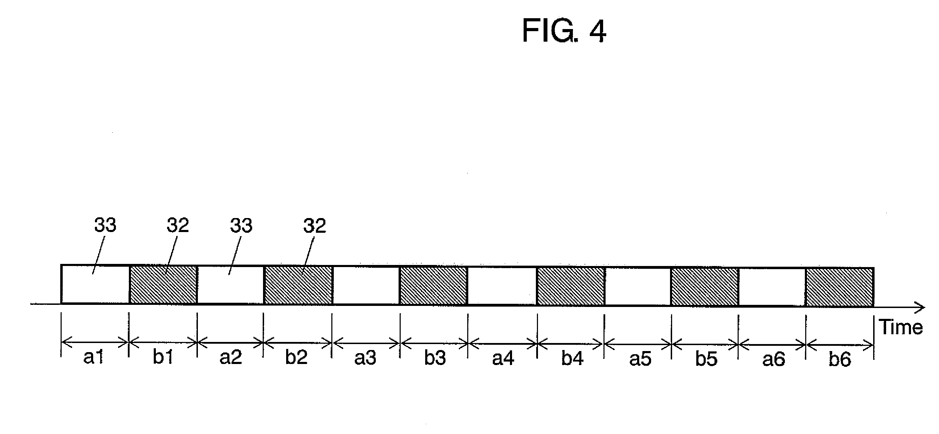

A description is made for circumstances in which switching occurs periodically, using Fig. 4, which shows a first state transition in diversity receiving mode 33 and single receiving mode 32.

In Fig. 4, the horizontal axis represents time, where an outlined box shows the time during which receiving apparatus 1 is in diversity receiving mode 33; a shaded box, in single receiving mode 32. From the above description, a reception error does not occur in time a1 (in diversity receiving mode 33), but it occurs in time b1 (in single receiving mode 32). Thus, reception rate JR, defined by the ratio of the time during which reception is performed without an error, is expressed by expression 1.

$$JR = \frac{\sum(a1 + a2 + \cdots)}{\sum(a1 + a2 + \cdots) + \sum(b1 + b2 + \cdots)}$$

$$\cdots(\text{expression } 1)$$

In the conventional method, release threshold 34 and start-up threshold 35 are always fixed, namely a1 = a2 = $\cdots$, and b1 = b2 = $\cdots$, thus if a1 = b1, for example, the reception rate is 50%.

Under the circumstances, in this embodiment, control circuit 7 exercises control so that switching from diversity receiving mode 33 to single receiving mode 32 is resistant to occurring when switching between diversity receiving mode 33 and single receiving mode 32 occurs, thereby increasing reception rate JR.

Concretely, control is exercised so that switching from diversity receiving mode 33 to single receiving mode 32 is resistant to occurring by lowering release threshold 34 below a value preliminarily set at the time to control switching from single receiving mode 32 to diversity receiving mode 33. That is, making release threshold 34 a further favorable value enables reception rate JR to be increased.

For example, if the release threshold preliminarily set is assumed to be 1E-5 as an initial state, control circuit 7 exercises control so as to switch to single receiving mode 32 when BER $\leqq$ 1E-5 is satisfied in diversity receiving mode 33. Then, control circuit 7 lowers the release threshold to 1E-6 at the time to control switching to diversity receiving mode 33 again, and lowers to 1E-7 when switched from single receiving mode 32 to diversity receiving mode 33 again. With such control, the condition for resetting from diversity receiving mode 33 to single receiving mode 32 gradually becomes strict, resulting in switching from diversity receiving mode 33 to single receiving mode 32 being resistant to occurring.

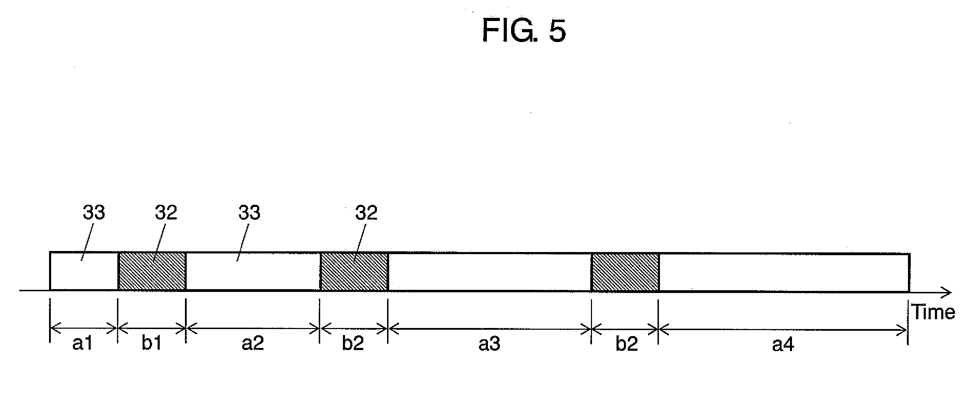

A description is made for how the receiving modes are switched using Fig. 5, which shows a second state transition in diversity receiving mode 33 and single receiving mode 32.

Here, assumption is made that receiving apparatus 1 is steadily at an intermediate level between the receiver sensitivity level in diversity receiving mode 33 and that in single receiving mode 32. Here, the BER measured by BER measurement circuit 6 is roughly constant by averaging BERs for a long time if the reception level is constant. However, to exercise control adaptively as in this embodiment, the BER measurement time usually needs to be less than a few seconds, and thus the BER is not constant, but varies. Consequently, if release threshold 34 is 1E-5 (initial state), the average time for being lower than release threshold 34 is a1; however, if release threshold 34 decreases to 1E-6 by the above-described control, the average time for being lower than release threshold 34 is a2 (larger than a1). In the same way, if release threshold 34 decreases to 1E-7, the average time for being lower than release threshold 34 is a3 (larger than a2). Meanwhile, the start-up condition remains unchanged, and thus the time during which the apparatus is in single receiving mode 32 is the same, namely b1 = b2 = $\cdots$.

Such control increases the ratio of the time during which receiving circuit 2 is in diversity receiving mode 33 on the whole, and so does reception rate JR expressed by expression 1.

If the reception environment improves and the reception level rises after release threshold 34 is thus lowered, receiving circuit 2 is resistant to entering single receiving mode 32 because release threshold 34 remains under control to be lowered. Consequently, control circuit 7 increases release threshold 34 again if the time during which the BER is lower than release threshold 34 continues for a given time, or returns release threshold 34 to its initial value to facilitate entering single receiving mode 32, thereby reducing the power consumption.

Next, other than lowering release threshold 34 as described above, a description is made for another method by which control circuit 7 exercises control so as to make switching from diversity receiving mode 33 to single receiving mode 32 resistant to occurring.

Control circuit 7 is exercising control so as to switch to single receiving mode 32 if the time during which the BER output from BER measurement circuit 6 is more favorable than release threshold 34 continues for a given time.

Under such control, control circuit 7 further increases the above-described given time when control is exercised so as to switch from single receiving mode 32 to diversity receiving mode 33.

For example, control circuit 7 exercises control so as to enter single receiving mode 32 if the time during which BER ≦ release threshold 34 is satisfied (i.e. the BER is more favorable than release threshold 34) continues for one second, with a given time being one second as its initial state. Then, control circuit 7 sets two seconds to the given time when receiving circuit 2 enters diversity receiving mode 33 again, and sets 3 seconds to the given time when receiving circuit 2 switches from single receiving mode 32 to diversity receiving mode 33. That is, increasing the given time higher than the initial value when receiving circuit 2 enters diversity receiving mode 33 enables control so that switching from diversity receiving mode 33 to single receiving mode 32 becomes more difficult.

Such control increases the ratio of the time during which receiving circuit 2 is in diversity receiving mode 33 in the same way as the method of lowering release threshold 34 described above, enabling reception rate JR to be improved.

In the above-described description, control circuit 7 lowers release threshold 34 or increases the given time when receiving circuit 2 switches from single receiving mode 32 to diversity receiving mode 33. However, reception rate JR is improved even if control circuit 7 lowers release threshold 34 or increases the given time when receiving circuit 2 switches from diversity receiving mode 33 to single receiving mode 32 or between both modes.

As described above, in the above embodiment, control circuit 7 lowers release threshold 34 or increases the given time when receiving circuit 2 switches from single receiving mode 32 to diversity receiving mode 33. With this mechanism, control circuit 7 exercises control so that switching from diversity receiving mode 33 to single receiving mode 32 becomes more difficult, thereby suppressing occurring of a reception error caused by highly frequent switching of the receiving modes.

Next, a description is made for another method of suppressing a reception error caused by highly frequent switching between the receiving modes. When switching between diversity receiving mode 33 and single receiving mode 32 occurs, reception rate JR can be increased as well as a result that control circuit 7 exercises control so that switching receiving circuit 2 from single receiving mode 32 to diversity receiving mode 33 becomes easy.

Concretely, control circuit 7 lowers start-up threshold 35 below the initial value when receiving circuit 2 switches from single receiving mode 32 to diversity receiving mode 33. That is, circuit 7 makes start-up threshold 35 further favorable than the initial value, thereby increasing reception rate JR.

Meanwhile, control circuit 7 is exercising control so that switching is made from single receiving mode 32 to diversity receiving mode 33 if the time during which the BER output by BER measurement circuit 6 is more adverse than start-up threshold 35 continues for a given time. Then, control circuit 7 reduces the above-described given time below the initial value, thereby increasing reception rate JR.

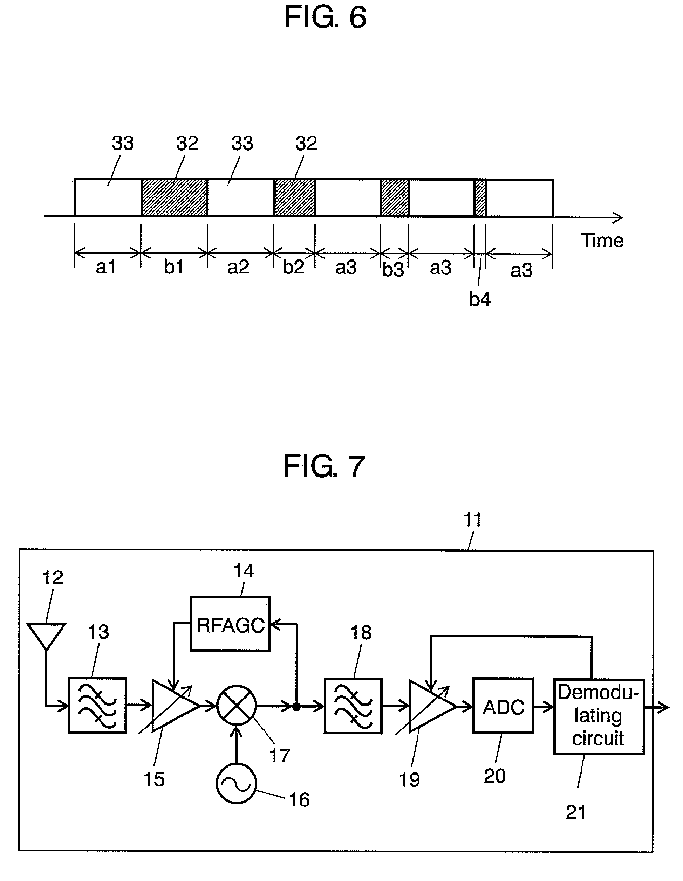

A description is made for how the receiving modes are switched when lowering start-up threshold 35 or reducing the given time, using Fig. 6, which shows a third state transition in diversity receiving mode 33 and single receiving mode 32.

As shown in Fig. 6, the time during which receiving circuit 2 is in the diversity receiving mode is constant (a1 = a2 = ⋯); the time during which receiving circuit 2 is in the single receiving mode gradually shortens (b1 > b2 > ⋯). Consequently, reception rate JR can be increased as a whole.

In this case as well, control circuit 7 increases release threshold 35 again or returns release threshold 35 to its initial value if the time during which the BER is lower than release threshold 34 continues for a given time after decreasing start-up threshold 35, to make entering diversity receiving mode 33 difficult.

As described above, in the above embodiment, control circuit 7 lowers release threshold 35 or decreases the given time when receiving circuit 2 switches from single receiving mode 32 to diversity receiving mode 33. With this mechanism, control circuit 7 exercises control so that switching from single receiving mode 32 to diversity receiving mode 33 becomes easier, thereby suppressing occurring of a reception error caused by highly frequent switching of the receiving modes.

SECOND EXEMPLARY EMBODIMENT

Hereinafter, a description is made for the second exemplary embodiment according to the present invention. In the first embodiment, first receiving circuit 8 and second receiving circuit 9 are used to switch between the high-sensitivity and low-sensitivity modes. In this embodiment, a single receiving circuit is used to switch between the modes.

Fig. 7 is a block diagram of the substantial part of a receiving apparatus according to the second embodiment of the present invention. Receiving circuit 11 in Fig. 7 corresponds to first receiving circuit 8 or second receiving circuit 9 in Fig. 1. In Fig. 7, receiving circuit 11 includes antenna 12 and RF filter 13 connected to antenna 12. Receiving circuit 11 further includes RF filter 13 and IFGCA (radio frequency gain control amplifier) 15 connected to the output from RFAGC (radio frequency automatic gain control) 14 described later. Receiving circuit 11 further includes mixer 17 connected to the output from RFGCA 15 and VCO (voltage controlled oscillator) 16. Receiving circuit 11 further includes IF filter 18 connected to the output from mixer 17 and IFGCA 19 connected to the output from IF filter 18, where the output from mixer 17 is connected to RFAGC 14 as well. Receiving circuit 11 further includes ADC (analog digital converter) 20 connected to the output from IFGCA (intermediate frequency gain control amplifier) 19 and demodulating circuit 21 connected to the output from ADC 20, where the output from demodulating circuit 21 is connected to IFGCA 19 and also to error correction circuit 3 (not shown) same as that in the first embodiment.

In the same way as in the first embodiment, the output from error correction circuit 3 is connected to control circuit 7 through BER measurement circuit 6, and control circuit 7 controls receiving circuit 11 according to an reception environment.

Further, a receiving system of the present invention is structured by connecting the output from error correction circuit 3 to display circuit 5 through decoding circuit 4.

In receiving circuit 11 with such a configuration, RF filter 13 suppresses unnecessary waves contained in a reception signal received by antenna 12, and RFGCA 15 controls the signal level so that it falls within a given level range. Next, receiving circuit 11 mixes a local signal output from VCO 16 with an output signal from RFGCA 15 by mixer 17 to convert them into a predetermined intermediate frequency (IF). Next, receiving circuit 11 removes unnecessary waves deviating from a desired band out of output signals from mixer 17 using IF filter 18 for the final signal filtration. Further, receiving circuit 11 controls gain so that it falls within the input range of ADC 20 using IFGCA 19. Next, receiving circuit 11 A/D converts an output signal from IFGCA 19 to a digital signal using ADC 20, and then demodulates it using demodulating circuit 21 to output the signal to error correction circuit 3 (not shown) same as that in the first embodiment.

In this mechanism, a low-sensitivity mode with low receiver sensitivity and power consumption than a high-sensitivity mode, which is a regular receiving mode, can be implemented. Hereinafter, its concrete example is described.

Receiver sensitivity S of a receiving apparatus is generally determined by a noise figure determined by a signal band width and temperature; noise figure F determined by the configuration of a receiving apparatus; and a required C/N determined by a method of modulating a signal, expressed by expression 2, where K represents the Boltzmann constant; T, temperature; and B, signal band width.

$$S = KTB + F + C/N$$

$$\cdot\cdot(\text{expression } 2)$$

Here, reducing a current used for RFGCA 15 lowers power consumption, but simultaneously deteriorates the receiver sensitivity. That is, assuming that the gain of RFGCA 15 is G1, the noise figure of RFGCA 15 is F1, and the noise figure subsequent to mixer 17 (included) is F2, then noise figure F of the entire receiving apparatus is expressed by expression 3.

$$F = F1 + \frac{F2 - 1}{G1}$$

$$\cdot\cdot(\text{expression } 3)$$

Here, reducing a current used for RFGCA 15 lowers gain G1, which then increases noise figure F of the entire receiving apparatus. Consequently, receiver sensitivity S of the receiving apparatus in expression 2 increases, thereby deteriorating the receiver sensitivity. Similarly, reducing a current used for mixer 17 and IFGCA 19 as well increases respective noise figures, thereby deteriorating the receiver sensitivity.

Accordingly, control circuit 7 (not shown) can implement a low-sensitivity mode with low receiver sensitivity and power consumption by restricting one or more of the currents used for RFGCA 15, mixer 17, and IFGCA 19.

Other mechanisms for implementing a low-sensitivity mode include that switching to IF filter 18 with less stages, and that with decreased sampling bits of ADC 20. However, the present invention improves the occurrence of a reception error caused by periodic switching independently of the mechanism of a low-sensitivity mode.

If the difference between the receiver sensitivity level in a high-sensitivity mode and that in a low-sensitivity mode implemented by these methods is large, switching between the receiving modes occurs periodically at an intermediate level to cause a reception error if control circuit 7 controls switching between the high-sensitivity and low-sensitivity modes, as described above.

Therefore, in this embodiment, in the same way as in the first embodiment, the ratio of the time during which receiving circuit 11 is in the high-sensitivity mode can be gradually increased, thereby improving reception rate JR. More specifically, if switching between the high-sensitivity and low-sensitivity modes occurs, control circuit 7 further makes switching of receiving circuit 11 from the high-sensitivity mode to the low more difficult to gradually increase the ratio of the time during which receiving circuit 11 is in the high-sensitivity mode. Therefore, control circuit 7 has only to lower release threshold 34, to increase the given time described in the first embodiment, or to do otherwise when switching is made from the low-sensitivity mode to high, for example.

In this embodiment as well, in the same way as in the first embodiment, the ratio of the time during which receiving circuit 11 is in the low-sensitivity mode can be gradually reduced, thereby improving reception rate JR as a whole. More specifically, when switching between the high-sensitivity and low-sensitivity modes occurs, control circuit 7 makes switching of receiving circuit 11 from the low-sensitivity mode to high easier to gradually reduce the ratio of the time during which receiving circuit 11 is in the low-sensitivity mode. Therefore, control circuit 7 has only to lower release threshold 35, to decrease the given time described in the first embodiment, or to do otherwise when switching is made from the low-sensitivity mode to high, for example.

In addition, when control circuit 7 exercises control for adaptive switching between various types of receiving modes according to a condition such as disturbance characteristic to power consumption, frequency characteristic to power consumption, temperature characteristic to power consumption, besides adaptive control of a receiving mode that trades off receiver sensitivity against power consumption, the present invention provides an advantage of suppressing the occurrence of a reception error by changing a switching condition for switching the receiving modes.

As described hereinbefore, when exercising control for selecting a receiving mode that trades off receiver sensitivity against power consumption according to a reception environment, the present invention exercises control when switching the reception modes occurs so as to make it difficult to enter a receiving mode with poor receiver sensitivity or to make it easy to enter a receiving mode with favorable receiver sensitivity to suppress the occurrence of a reception error due to switching control.

INDUSTRIAL APPLICABILITY

A receiving apparatus and a receiving system of the present invention successfully balance the reception performance with the battery duration or the like, and thus are useful for a battery-powered, mobile reception terminal such as a television receiver for a mobile terminal.

**Claims**

1.    A receiving apparatus comprising:

a receiving circuit having a high-sensitivity mode and a low-sensitivity mode with sensitivity lower than the high-sensitivity mode;
a reception quality judging circuit judging reception quality of a reception signal output from the receiving circuit; and
a control circuit controlling switching between the high-sensitivity mode and the low-sensitivity mode according to a signal from the reception quality judging circuit,
wherein,
if the receiving circuit is in the high-sensitivity mode, the control circuit switches the receiving circuit to the low-sensitivity mode when a judgement result according to the reception quality judging circuit becomes more favorable than a release threshold; and
if the receiving circuit is in the low-sensitivity mode, the control circuit switches the receiving circuit to the high-sensitivity mode when a judgement result according to the reception quality judging circuit becomes more adverse than a start-up threshold, and
wherein, if switching between the high-sensitivity mode and the low-sensitivity mode occurs, the control circuit exercises control so that switching from the high-sensitivity mode to the low-sensitivity mode is difficult.

2.    The receiving apparatus of claim 1, wherein, if switching between the high-sensitivity mode and the low-sensitivity mode occurs, the control circuit exercises control so that switching from the high-sensitivity mode to the low-sensitivity mode is difficult by making the release threshold more favorable.

3.    The receiving apparatus of claim 2, wherein the control circuit returns the release threshold to an initial value if a state in which a judgement result according to the reception quality judging circuit is more favorable than the release threshold continues for a given time.

4. The receiving apparatus of claim 1,
   wherein the control circuit switches the receiving circuit from the high-sensitivity mode to the low-sensitivity mode if a state in which a judgement result according to the reception quality judging circuit is more favorable than the release threshold continues for a given time, and
   wherein the control circuit exercises control so that switching from the high-sensitivity mode to the low-sensitivity mode is difficult by further increasing the given time if switching between the high-sensitivity mode and the low-sensitivity mode occurs.

5. The receiving apparatus of claim 4, wherein the control circuit returns the given time to an initial value if a state in which a judgement result according to the reception quality judging circuit is more favorable than the release threshold continues for a given time.

6. The receiving apparatus of claim 1,
   wherein the receiving circuit includes a first receiving circuit, a second receiving circuit, and a selecting or combining circuit connected to an output side of the first receiving circuit and an output side of the second receiving circuit;
   wherein the high-sensitivity mode is a mode in which the selecting or combining circuit performs reception using the first receiving circuit and the second receiving circuit; and
   wherein the low-sensitivity mode is a mode in which the selecting or combining circuit performs reception using either one of the first receiving circuit and the second receiving circuit.

7. The receiving apparatus of claim 6, wherein the control circuit exercises control so that switching from the high-sensitivity mode to the low-sensitivity mode is difficult by making the release threshold more favorable if switching between the high-sensitivity mode and the low-sensitivity mode occurs.

8. The receiving apparatus of claim 7, wherein the control circuit returns the release threshold to an initial value if a state in which a judgement result according to the reception quality judging circuit is more favorable than the release threshold continues for a given time.

9. The receiving apparatus of claim 6,

   wherein the control circuit switches the receiving circuit from the high-sensitivity mode to the low-sensitivity mode if a state in which a judgement result according to the reception quality judging circuit is more favorable than the release threshold continues for a given time; and
   wherein the control circuit exercises control so that switching from the high-sensitivity mode to the low-sensitivity mode is difficult by further increasing the given time if switching between the high-sensitivity mode and the low-sensitivity mode occurs.

10. The receiving apparatus of claim 9, wherein the control circuit returns the given time to an initial value if a state in which a judgement result according to the reception quality judging circuit is more favorable than the release threshold continues for a given time.

11. A receiving apparatus comprising:

    a receiving circuit having a high-sensitivity mode and a low-sensitivity mode with sensitivity lower than the high-sensitivity mode;
    a reception quality judging circuit judging reception quality of a reception signal output from the receiving circuit; and
    a control circuit controlling switching between the high-sensitivity mode and the low-sensitivity mode according to a signal from the reception quality judging circuit,
    wherein,
    if the receiving circuit is in the high-sensitivity mode, the control circuit switches the receiving circuit to the low-sensitivity mode when a judgement result according to the reception quality judging circuit becomes more favorable than a release threshold; and
    if the receiving circuit is in the low-sensitivity mode, the control circuit switches the receiving circuit to the high-sensitivity mode when a judgement result according to the reception quality judging circuit becomes more adverse than a start-up threshold, and wherein, if switching between the high-sensitivity mode and the low-sensitivity mode occurs, the control circuit exercises control so that switching from the high-sensitivity mode to the low-sensitivity mode is easy.

**12.** The receiving apparatus of claim 11, wherein, if switching between the high-sensitivity mode and the low-sensitivity mode occurs, the control circuit exercises control so that switching from the low-sensitivity mode to the high-sensitivity mode is easy by making the release threshold more favorable.

**13.** The receiving apparatus of claim 12, wherein the control circuit returns the release threshold to an initial value if a state in which a judgement result according to the reception quality judging circuit is more favorable than the release threshold continues for a given time.

**14.** The receiving apparatus of claim 11,
wherein the control circuit switches the receiving circuit from the low-sensitivity mode to the high-sensitivity mode if a state in which a judgement result according to the reception quality judging circuit is more adverse than the release threshold continues for a given time, and
wherein the control circuit exercises control so that switching from the low-sensitivity mode to the high-sensitivity mode is easy by further decreasing the given time if switching between the high-sensitivity mode and the low-sensitivity mode occurs.

**15.** The receiving apparatus of claim 14, wherein the control circuit returns the given time to an initial value if a state in which a judgement result according to the reception quality judging circuit is more favorable than the release threshold continues for a given time.

**16.** The receiving apparatus of claim 11,
wherein the receiving circuit includes a first receiving circuit, a second receiving circuit, and a selecting or combining circuit connected to an output side of the first receiving circuit and an output side of the second receiving circuit;
wherein the high-sensitivity mode is a mode in which the selecting or combining circuit performs reception using the first receiving circuit and the second receiving circuit; and
wherein the low-sensitivity mode is a mode in which the selecting or combining circuit performs reception using either one of the first receiving circuit and the second receiving circuit.

**17.** The receiving apparatus of claim 16, wherein the control circuit exercises control so that switching from the low-sensitivity mode to the high-sensitivity mode is easy by making the start-up threshold more favorable if switching between the high-sensitivity mode and the low-sensitivity mode occurs.

**18.** The receiving apparatus of claim 17, wherein the control circuit returns the start-up threshold to an initial value if a state in which a judgement result according to the reception quality judging circuit is more favorable than the release threshold continues for a given time.

**19.** The receiving apparatus of claim 16,
wherein the control circuit switches the receiving circuit from the low-sensitivity mode to the high-sensitivity mode if a state in which a judgement result according to the reception quality judging circuit is more adverse than the start-up threshold continues for a given time; and
wherein the control circuit exercises control so that switching from the low-sensitivity mode to the high-sensitivity mode is easy by further decreasing the given time if switching between the high-sensitivity mode and the low-sensitivity mode occurs.

**20.** The receiving apparatus of claim 19, wherein the control circuit returns the given time to an initial value if a state in which a judgement result according to the reception quality judging circuit is more favorable than the release threshold continues for a given time.

**21.** A receiving apparatus of either one of claims 1 through 20, wherein setting the release threshold provides a more favorable judgement result according to the reception quality judging circuit than setting the start-up threshold.

**22.** A receiving apparatus of either one of claims 1 through 20, wherein the reception quality judging circuit judges reception quality using an error rate of a reception signal.

**23.** A receiving apparatus of either one of claims 1 through 20, wherein the reception quality judging circuit judges reception quality using a C/N ratio of a reception signal.

**24.** A receiving apparatus of either one of claims 1 through 20, wherein the reception quality judging circuit judges reception quality using a reception level of a reception signal.

**25.** A receiving system comprising a decoding circuit connected to an output side of a receiving apparatus of either one of claims 1 through 24, and a display circuit connected to an output side of the decoding circuit.

# FIG. 1

# FIG. 2

Onput level (dBm)

# FIG. 3

Input level (dBm)

# FIG. 4

FIG. 5

EP 2 081 302 A1

Time

# FIG. 6

# FIG. 7

## INTERNATIONAL SEARCH REPORT

| International application No. |
| --- |
| PCT/JP2008/000139 |

A. CLASSIFICATION OF SUBJECT MATTER
*H04B7/08(2006.01)i*

According to International Patent Classification (IPC) or to both national classification and IPC

B. FIELDS SEARCHED

Minimum documentation searched (classification system followed by classification symbols)
H04B7/08

Documentation searched other than minimum documentation to the extent that such documents are included in the fields searched
Jitsuyo Shinan Koho           1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-186961 A  (Casio Computer Co., Ltd.), 13 July, 2006 (13.07.06), Par. Nos. [0127] to [0157]; Figs. 16 to 18 & US 2006-166635 A1     & EP 1702416 A | 1-25 |
| A | JP 10-242894 A  (Mitsubishi Electric Corp.), 11 September, 1998 (11.09.98), Par. Nos. [0051] to [0082]; Figs. 2, 3 (Family: none) | 1-25 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 February, 2008 (20.02.08) | 04 March, 2008 (04.03.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006311258 A